**Europäisches Patentamt**

**European Patent Office**

**Office européen des brevets**

(11) Veröffentlichungsnummer: **0 041 594**

**A1**

(12) # EUROPÄISCHE PATENTANMELDUNG

(21) Anmeldenummer: **81101703.7**

(22) Anmeldetag: **09.03.81**

(51) Int. Cl.³: **A 01 K 31/04**

(30) Priorität: **11.06.80 DE 3021860**

(43) Veröffentlichungstag der Anmeldung:
**16.12.81 Patentblatt 81/50**

(84) Benannte Vertragsstaaten:
**AT BE CH DE FR GB IT LI NL SE**

(71) Anmelder: **Kühlmann, Josef**
**Königstrasse 41**
**D-4401 Laer(DE)**

(72) Erfinder: **Kühlmann, Josef**
**Königstrasse 41**
**D-4401 Laer(DE)**

(74) Vertreter: **Habbel, Hans-Georg, Dipl.-Ing.**
**Postfach 3429 Am Kanonengraben 11**
**D-4400 Münster(DE)**

(54) **Entmistungsförderer für Geflügel-Batterienestanlagen.**

(57) Entmistungsförderer für vorzugsweise Geflügel-Batterienestanlagen, der auf den Kotblechen (5,6,7,8) läuft und Schrapperstege aufweist, die um quer zur Förderrichtung (F) ausgerichtete Schwenkachsen pendelnd gelagert sind, so daß sie in der einen Richtung gegen die Pendelbewegung arretiert und den Kot (M) fördern, hingegen in der rückläufigen Bewegungsrichtung des Förderers aus der wirksamen Förderstellung herausgelangen und den Kot überlaufen können.

Fig. 1

- 1 -

## Entmistungsförderer für Geflügel-Batterienestanlagen

Die Erfindung bezieht sich auf einen Entmistungsförderer für Geflügel-Batterienestanlagen mit unter
den Sitzrosten angeordneten Kotblechen, über die der
Entmistungsförderer verfahrbar ist, der aus einem über
Umlenkrollen geführten, Schrapperstege tragenden Zugmittel besteht.

Einrichtungen dieser Art sind beispielsweise aus der
DE-PS 19 36 29o bekanntgeworden. Bei diesen bekannten
Einrichtungen sind umlaufende Ketten vorgesehen, die
die Schrapperstege tragen und die die einzelnen Käfige
umlaufen. Bei der Einrichtung gemäß dem DE-GM
79 2o 942 tragen die Ketten die Schrapperstege mittig,
d.h. es ist für eine Förderanlage nur eine Kette vorgesehen, was den Nachteil hat, daß die Kette sich
stets durch den sehr korrosiven Kot bewegen muß.

- 2 -

Beiden Anordnungen ist eigen, daß eine Anhäufung des Kotes erfolgt, und daß die Möglichkeit besteht, insbesondere bei langen großen Förderanlagen, daß der geförderte Kothaufen so hoch wird, daß er sich durch die Sitzroste durchdrückt, d.h. der Kot durch die Sitzroste hindurchgepreßt wird.

Der Erfindung liegt die Aufgabe zugrunde, hier Abhilfe zu schaffen und außerdem dafür zu sorgen, daß der Bewegungsweg der eigentlichen empfindlichen Ketten möglichst kurz gehalten wird und daß weiterhin die Möglichkeit geschaffen wird, anstelle von Ketten starre Zugstangen einzusetzen, da auch durch eine solche Maßnahme Korrosionserscheinungen vermieden werden, da die zahlreichen Gelenke ausgeschaltet werden.

Diese der Erfindung zugrundeliegende Aufgabe wird durch die in den Ansprüchen genannten Maßnahmen gelöst, insbesondere dadurch, daß nur ein kurzer Förderweg ermöglicht wird, daß gleichzeitig aber trotzdem ein einwandfreies Wegfördern des Kotes erreicht wird.

Durch das weitere Merkmal der Erfindung, daß die eigentlichen Schrapperstege als flache Stege ausgebildet sind, beispielsweise als Flacheisen, wird erreicht, daß ein Anhäufen des Kotes mit Sicherheit vermieden wird, so daß ein Durchpressen des angehäuften Gutes durch die Sitzroste ausgeschaltet wird.

Ein Ausführungsbeispiel der Erfindung wird nachfolgend anhand der Zeichnungen erläutert. Die Zeichnungen zeigen in

Fig. 1      schematisch die Ansicht einer Förderanlage und in

Fig. 2      in wesentlich größerem Maßstab die Ausbildung des schwenkbaren Schrapper-
            steges.

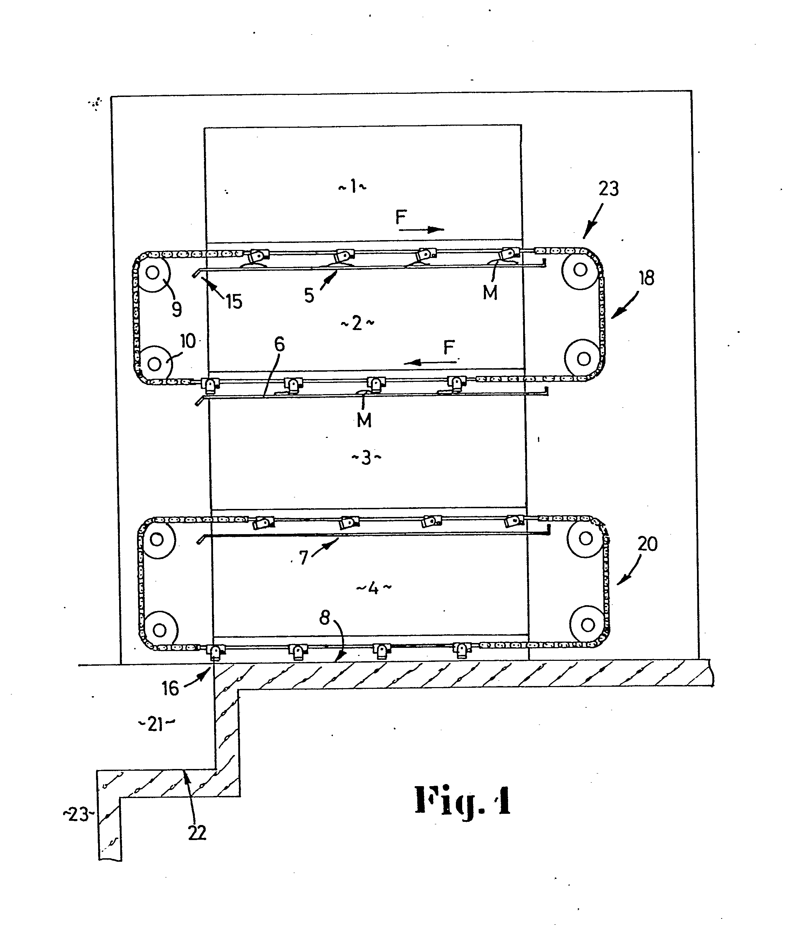

In der Zeichnung sind in Fig. 1 mit 1, 2, 3 und 4 vier übereinander angeordnete Etagen einer Geflügel-Batterienestanlage bezeichnet, die aus einzelnen Käfigen bestehen, in denen die Hühner untergebracht sind, wobei die Käfige an ihrer Unterseite durch einen Sitzrost abgeschlossen werden und an ihrer Frontseite mit entsprechenden Futteranlagen ausgerüstet sind, ebenso wie mit entsprechenden Eiersammelvorrichtungen, die aber nicht Gegenstand der Erfindung sind und daher auch nicht näher erläutert zu werden brauchen.

Unter jedem Sitzrost der Käfige ist ein Kotblech 5, 6, 7, 8 angeordnet, auf dem der durch die Sitzroste hindurchfallende Kot gesammelt wird. Mit 9 und 1o sind Umlenkrollen bezeichnet, wobei bei dem dargestellten Ausführungsbeispiel jeweils die Rollen 1o als Antriebsrollen ausgebildet sind, die durch einen nicht dargestellten Motor angetrieben werden. Um die Rollen 9 und 1o werden Ketten 12 geführt, die zwischen sich Stege 14 aufnehmen, so daß Entmistungsförderer 18 und 2o geschaffen werden. Die Förderrichtung ist in Fig. 1 durch Pfeile F angedeutet, ebenso wie die gebildeten Kothaufen M .

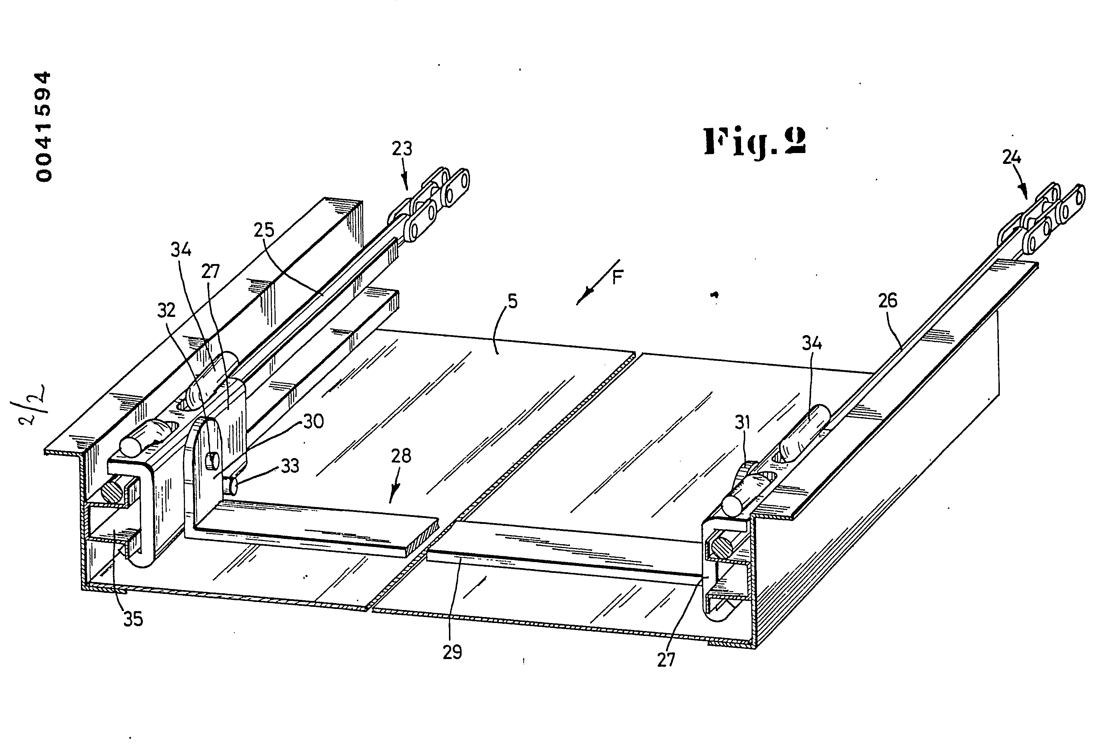

Das Kotblech 5, das unterhalb der obersten Etage 1 liegt, ist so ausgebildet, daß das Abwurfende 15 in vertikaler Projektion noch in dem vom Entmistungsförderer 18 bestrichenen Bereich des Kotbleches 6 liegt, das unterhalb der zweiten Etage 2 angeordnet ist. Hierdurch wird erreicht, daß der von dem in Richtung des Pfeiles F umlaufenden Entmistungsförderer 18 auf dem Kotblech 5 gesammelte Kot über das Abwurfende 15 auf das Kotblech 6 fallen kann, so daß nunmehr der Förderer auf seinem Rücklauf den auf dem Kotblech 6 gesammelten Kot mitnimmt und diesen Kot über das Abwurfende 16 abgibt. Vom Abgabeende 16 gelangt der Kot über eine Rutsche oder im freien Fall in einen allgemein mit 21 bezeichneten Kotsammelraum, der

- 5 -

beispielsweise im Fundament der Gesamtanlage ausgebildet wird und aus einem horizontalen Boden 22 besteht. Die Ausbildung des Förderers geht deutlicher aus Fig. 2 hervor. In Fig. 2 sind mit 23 und 24 Förderketten bezeichnet, die lediglich im Bereich der Umlenkrollen 9 und 1o angeordnet sind, während in dem übrigen Bereich des Förderers Zugstangen 25 und 26 vorgesehen werden, die über Zugstangenschlösser 27 die eigentlichen Schrapperstege 28 tragen.

Der Schrappersteg weist dabei einen flachen, beispielsweise als Flacheisen ausgebildeten Steg 29 auf und zwei aufrechtgerichtete Flansche 3o und 31, die über Schwenkachsen (in Fig. 2 ist die Schwenkachse 32 erkennbar) an den Zugschlössern 27 anschließen. Die Zugschlösser tragen weiterhin Arretierungsbolzen 33, die die Schwenkbewegung der Schrapperstege 28 begrenzen, so daß eine Bewegung des Schrappersteges 28 nur in einer Richtung möglich ist. Bei der dargestellten Ausführungsform gemäß Fig. 2 ist die eigentliche Förderrichtung des Förderers mit dem Pfeil $F$ angedeutet, so daß auf diesem Weg der eigentliche Steg 29 des Schrappersteges 28 gegen den Anschlagbolzen 33 anliegt und nunmehr eine Mitnahme des sich auf dem eigentlichen Kotblech 5 befindlichen Kotes bewirkt und kleine Kothaufen $M$ bildet. Die rückläufige Bewegung ermöglicht nunmehr ein Anheben des Schrappersteges 28, d.h. ein Schwenken um die Schwenkachse 32, so daß nunmehr der Schrappersteg über den ggf. noch vorhandenen Kot oder den angeförderten Kothaufen M hinweggleiten kann und erst bei der nächsten Rückbewegung wieder ein Mitnehmen des Kotes bewirkt.

Die Zugstangen 25 schließen über Haken 34 an die Zugstangenschlösser 27 an, so daß ein leichtes Auswechseln dieser Bauteile möglich ist.

Die Zugstangenschlösser 27 sind, wie aus der Zeichnung ersichtlich, als U-Bauteile ausgebildet und umgreifen entsprechende Hutprofile 35, die der Führung der Zugstangen 25 und über die Zugschlösser 27 der Schrappersteg 28 dienen und beispielsweise aus Metall bestehen können.

Der Förderer bewegt sich bei der erfindungsgemäßen Anordnung ständig hin und her, so daß das Ansammeln großer Kothaufen M nicht stattfindet, sondern der Kot wird im wesentlichen kontinuierlich weggefördert, wodurch ein Hindurchpressen durch die Sitzroste mit Sicherheit ausgeschaltet wird.

Darüberhinaus zeigt Fig. 1 in Verbindung mit Fig. 2 deutlich, daß die erfindungsgemäße Ausbildung trotz gleicher Herstellung aller Bauteile eine beliebige Förderrichtung ermöglicht. Es ist beispielsweise anhand von Fig. 2 ersichtlich, daß dadurch, daß das Schloß 27 in der linken Seite der Darstellung auf die rechte Seite des Förderers gesetzt wird, nunmehr der Anschlagbolzen 33 auf der in der Zeichnung vorderen Seite des eigentlichen Schrappersteges liegt, so daß dadurch die Arretierung des Schrappersteges in einer anderen Richtung erfolgt, so daß es für den Benutzer der erfindungsgemäßen Einrichtung am Ort möglich ist, die Förderrichtung des Förderers zu bestimmen. Das hat den Vorteil, daß je nach den gegebenen örtlichen Verhältnissen die eine oder andere Stirnseite der Förderer freigehalten werden kann und damit besser zugänglich ist, um Wartungsmaßnahmen oder sonstige Arbeiten vornehmen zu können.

Natürlich ist es möglich, anstelle der aus Stahlbleche bestehenden Schrapperstege auch aus Kunststoff bestehende Stege einzusetzen, da die Stege keine große Last aufzunehmen haben, andererseits aber Kunststoff wesentlich bessere Korrosionswiderstandsfähigkeiten aufweist.

- 1 -

Patentansprüche:

1.  Entmistungsförderer für Geflügel-Batterienestanlagen mit unter den Sitzrosten angeordneten
    Kotblechen, über die der Entmistungsförderer
    verfahrbar ist, der aus einem über Umlenkrollen geführten, Schrapperstege tragenden
    Zugmittel besteht, dadurch gekennzeichnet, daß
    die Schrapperstege (28) um quer zur Förderrichtung ausgerichtete Schwenkachsen (32)
    derart pendelnd gelagert sind, daß sie in der
    für den Kot gewünschten Förderrichtung gegen
    Pendelbewegungen arretiert, in der rückläufigen Bewegungsrichtung des Förderers aus
    einer wirksamen Förderstellung in eine unwirksame Stellung pendeln können.

2.  Entmistungsförderer nach Anspruch 1, dadurch
    gekennzeichnet, daß die Schrapperstege (28)
    als flache Profilteile ausgebildet sind.

3.  Entmistungsförderer nach Anspruch 1 und 2,
    dadurch gekennzeichnet, daß die Schrapperstege (28) als U-Bügel ausgebildet sind,
    dessen Steg (29) das flache Förderteil bildet

0041594

- 2 -

und dessen endständige Flansche (3o, 31) die
Schwenkachse (32) tragen.

4. Entmistungsförderer nach einem oder mehreren
der vorhergehenden Ansprüche, dadurch gekennzeichnet, daß der Förderer aus die Schrapperstege (28) tragenden Zugstangen (25, 26) besteht, die im Bereich der Umlenkrollen an
Förderketten (23, 24) oder Förderseilen anschließen.

5. Entmistungsförderer nach Anspruch 1, dadurch
gekennzeichnet, daß die Arretierung der
Pendelbewegung der Schrapperstege (28) durch
in den Weg der Schrapperstege ragende Anschlagbolzen (33) erfolgt, die von den die
Schwenkachsen (32) tragenden Bauteilen getragen werden.

6. Entmistungsförderer nach einem oder mehreren
der vorhergehenden Ansprüche, dadurch gekennzeichnet, daß die die Schwenkachse tragenden
Bauteile als Zugstangenschlösser (27) ausgebildet sind.

- 3 -

7.  Entmistungsförderer nach einem oder mehreren der vorhergehenden Ansprüche, dadurch gekennzeichnet, daß die Zugstangen (25, 26) an die Zugstangenschlösser (27) über Hakenenden (34) anschließen.

**Fig. 1**

0041594

Fig.2

| Europäisches Patentamt | **EUROPÄISCHER RECHERCHENBERICHT** | EP 81 10 1703.7 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 810 444 (J.L. CONLEY) <br> * Ansprüche 1, 3; Spalte 1, Zeilen 49 bis 57; Spalte 2, Zeilen 1 bis 8 und 12 bis 20; Spalte 3, Zeile 68; Spalte 4, Zeilen 1 bis 3; Fig. 1, 4, 5 * <br> -- | 1-4 |
| | GB - A - 1 103 053 (BIG DUTCHMAN INC.) <br> * Anspruch 1; Fig. 1, 3 * <br> -- | 1-3 |
| P | US - A - 4 243 137 (F.R. LAURENZ) <br> * Ansprüche 1, 3, 4, 9; Fig. 3 * <br> -- | 1-3 |
| A | US - A - 2 416 469 (NAT CORDIS) <br> * Anspruch 1; Fig. 1, 2,3 * <br> -- | |
| D,A | DE - C - 1 936 290 (J. KÜHLMANN) <br> * Anspruch 1; Fig. 1 * <br> ---- | |

**KLASSIFIKATION DER ANMELDUNG (Int. Cl.³)**

A 01 K 31/04

**RECHERCHIERTE SACHGEBIETE (Int. Cl.³)**

A 01 K 1/01
A 01 K 31/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 03-09-1981 | FINDELI |

EPA form 1503.1 06.78